# EUROPEAN PATENT APPLICATION

(11) **EP 4 132 130 A1**
(43) Date of publication of application: **08.02.2023**
(21) Application number: 20928624.4
(22) Date of filing: 02.04.2020
(51) Int. Cl.: H04W 56/00, H04W 72/04

(54) **TERMINAL, AND COMMUNICATION METHOD**

(71) Applicant: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2020/015252
(87) International publication number: WO 2021/199415

(57) **Abstract**

A terminal includes a receiver that receives information related to a reference signal, and a controller that uses the reference signal in a radio resource control (RRC) idle state or in an RRC inactive state, based on the information.

## Description

### TECHNICAL FIELD

The present invention relates to a terminal and a communication method in a radio communication system.

### BACKGROUND ART

In New Radio (NR) (also referred to as 5G), which is a successor to Long-Term Evolution (LTE), a technology that meets requirements, including a large system capacity, a fast data transmission rate, low latency, simultaneous connections of a large number of terminals, a low cost, and reduced power consumption, has been discussed (Non-Patent Document 1, for example). 5G is a mobile communication system that supports high frequency bands, such as millimeter waves over 10 GHz. Ultra-high-speed wireless data communications of several Gbps can be achieved by using frequency bandwidths of several hundred MHz, which are significantly wider than conventional systems such as LTE.
in NR, reference signals such as a tracking reference signal (TRS) used for time synchronization or frequency synchronization and a channel state information reference signal (CSI-RS) used for channel state estimation are employed. These reference signals are indicated to and used by a terminal that is in a radio resource control (RRC) connected state (RRC_CONNECTED).

### RELATED-ART DOCUMENTS

### NON-PATENT DOCUMENTS

NON-PATENT DOCUMENT 1: 3GPP TS 38. 300 V16. 0. 0 (2019-12)

### SUMMARY OF THE INVENTION

### PROBLEM TO BE SOLVED BY THE INVENTION

When the terminal is in an RRC idle state (RRC_IDLE) or in an RRC inactive state (RRC_INACTIVE), an SSB (SS/PBCH block) is used for time synchronization or frequency synchronization. However, due to the limited flexibility of SSB resource allocation, resource locations where synchronization can be performed are limited.

The present invention has been made in view of the above, and aims to increase locations in the time domain where synchronization can be performed in a radio communication system.

### MEANS TO SOLVE THE PROBLEM

According to the disclosed technology, a terminal includes a receiver that receives information related to a reference signal, and a controller that uses the reference signal in a radio resource control (RRC) idle state or in an RRC inactive state, based on the information.

### EFFECTS OF THE INVENTION

According to the disclosed technology, in a radio communication system, it is possible to increase locations in the time domain where synchronization can be performed.

### BRIEF DESCRIPTION OF THE DRAWINGS

Fig. 1 is a diagram illustrating an example of a configuration of a radio communication system according to an embodiment of the present invention;
Fig. 2 is a diagram illustrating an example (1) of resource allocation according to an embodiment of the present invention;
Fig. 3 is a diagram illustrating an example (2) of resource allocation according to an embodiment of the present invention;
Fig. 4 is a sequence diagram illustrating an example (1) of a process related to synchronization according to an embodiment of the present invention;
Fig. 5 is a flowchart illustrating an example (2) of a process related to synchronization according to an embodiment of the present invention;
Fig. 6 is a flowchart illustrating an example (3) of a process related to synchronization according to an embodiment of the present invention;
Fig. 7 is a diagram illustrating an example of a functional configuration of the base station 10 according to an embodiment of the present invention;
Fig. 8 is a diagram illustrating an example of a functional configuration of a terminal 20 according to an embodiment of the present invention; and
Fig. 9 is a diagram illustrating an example of a hardware configuration of the base station 10 or the terminal 20 according to an embodiment of the present invention.

### MODE FOR CARRYING OUT THE INVENTION

In the following, embodiments of the present invention will be described with reference to the drawings. The embodiments described below are merely examples, and embodiments to which the present invention is applied are not limited to the following embodiments.

An existing technology may be used as necessary when a radio communication system according to the embodiments of the present invention is operated. The existing technology may be LTE; however, the existing technology is not limited to LTE. As used herein, the term "LTE" has a broader meaning including LTE-Advanced and systems (such as NR) after LTE-Advanced, unless otherwise specified.

Further, in the embodiments of the present invention described below, terms used in the existing LTE, such as a synchronization signal (SS), a primary SS (PSS), a secondary SS (SSS), a physical broadcast channel (PBCH), a physical random access channel (PRACH), a physical random access channel (PRACH), a physical downlink control channel (PDCCH), a Physical Downlink Shared Channel (PDSCH), a physical uplink control channel (PUCCH), and a physical uplink shared channel (PUSCH) are used. The above-described terms are used for the convenience of description. Signals, functions, and the like, which are similar to the above-described terms, may be referred to as different names. In NR, the above-described terms are denoted as an NR-SS, NR-PSS, NR-SSS, NR-PBCH, NR-PRACH, NR-PDCCH, NR-PDSCH, NR-PUCCH, and NR-PUSCH. Note that a signal used in NR is not necessarily referred to as "NR-".

Further, in the embodiments, a duplex scheme may be a time division duplex (TDD) scheme, a frequency division duplex (FDD) scheme, or any other scheme (such as flexible duplex).

Further, in the embodiments of the present invention, the expression "a radio (wireless) parameter is configured" may mean that a predetermined value is pre-configured, or may mean that a radio parameter indicated by a base station 10 or a terminal 20 is configured.

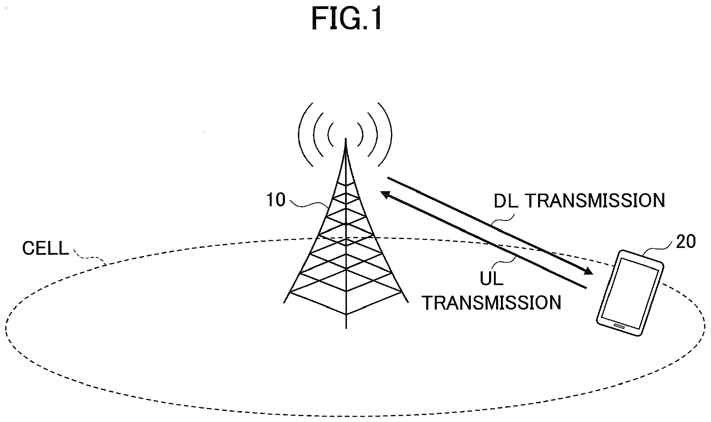

Fig. 1 is a diagram illustrating an example of a configuration of a radio communication system according to an embodiment of the present invention. As illustrated in Fig. 1, the radio communication system includes the base station 10 and the terminal 20. The one base station 10 and the one terminal 20 illustrated in Fig. 1 are merely examples, and a plurality of base stations 10 and a plurality of terminals 20 may be provided. The terminal 20 may be referred to as "user equipment". Further, the radio communication system according to the present embodiment may be referred to as an NR-U system.

The base station 10 is a communication apparatus that provides one or more cells and wirelessly communicates with the terminal 20. Physical resources of a radio signal may be defined in the time domain and the frequency domain, the time domain may be defined in slots or OFDM symbols, and the frequency domain may be defined in subbands, subcarriers or resource blocks.

As illustrated in Fig. 1, the base station 10 transmits control information or data to the terminal 20 in the downlink (DL), and receives control information or data from the terminal 20 in the uplink. Both the base station 10 and the terminal 20 can perform beamforming to transmit and receive signals. Both the base station 10 and the terminal 20 can apply MIMO (Multiple Input Multiple Output) communication to the DL or UL. Further, both the base station 10 and the terminal 20 may perform communications via a secondary cell (Scell) and a primary cell (PCell) using carrier aggregation (CA).

The Terminal 20 is a communication apparatus equipped with a wireless communication function such as a smartphone, a tablet, a wearable device, or a communication module for M2M (machine-to-machine). As illustrated in Fig. 1, the terminal 20 utilizes various communication services provided by the radio communication system by receiving control information or data from the base station 10 in the DL, and transmitting control information or data to the base station 10 in the UL.

NR-Dual connectivity (NR-DC) may be performed. For example, a base station 10A serving as a master node (MN) and a base station 10B serving as a secondary Node (SN) are provided. The base station 10A and the base station 10B are each connected to a core network. The terminal 20 communicates with both the base station 10A and the base station 10B.

A cell group provided by the base station 10A serving as the MN is referred to as a master cell group (MCG), and a cell group provided by the base station 10B serving as the SN is referred to as a secondary cell group (SCG).

In NR, there are reference signals such as a tracking reference signal (TRS) used for time synchronization and/or frequency synchronization (tracking) and a channel state information reference signal (CSI-RS) used for channel state information estimation (including measurement reports). Information related to these reference signals is indicated to and used by the terminal 20 that is in the RRC connected state (RRC_CONNECTED). The TRS may be defined as CSI-RS for tracking.

When the terminal is in the RRC idle state (RRC_IDLE) or in the RRC inactive state (RRC_INACTIVE), an SSB (SS/PBCH block) is used for time synchronization or frequency synchronization. However, due to the limited flexibility of SSB resource allocation, resource locations where synchronization can be performed are limited.

For example, information related to resource allocation (e.g., periodicity, density, and locations) can be flexibly configured for a TRS and a CSI-RS for the terminal 20 in the RRC connected state. Conversely, resource allocation is unable to be flexibly configured for an SSB (SS/PBCH block) for the terminal 20 in the RRC idle state or in the RRC inactive state.

In particular, a plurality of TRSs/CSI-RSs/SSBs corresponding to different beams are used for multi-beam operation in Frequency Range 2 (FR2). However, because there are few candidate resource locations to which the plurality of SSBs can be allocated, the limitation on resource location configuration may be more significant.

The terminal 20 in the RRC idle state or in the RRC inactive state performs monitoring of paging information, measurement, or the like, and thus needs to perform time/frequency tracking (synchronization) in advance. However, due to limitations related to SSB resource locations, locations where time/frequency tracking (synchronization) or measurement can be performed are limited.

As described above, because the locations where time/frequency tracking (synchronization) or measurement can be performed are limited, there may be a possibility that time locations where monitoring of paging information, measurement, and time/frequency tracking (synchronization) are performed are dispersed. As a result, the power consumption of terminal 20 may increase. That is, if the above-described operations can be performed as continuously as possible, the sleep time of the terminal 20 can be increased, and the power consumption can be reduced.

In view of the above, information related to a TRS and/or a CSI-RS may be indicated to the terminal 20 in the RRC idle state or in the RRC inactive state. The information related to the TRS and/or the CSI-RS may be, for example, resource locations. The information related to the TRS and/or the CSI-RS may be indicated to the terminal 20 in the RRC idle state or in the RRC inactive state via broadcast information. In the following description, "at least one of a TRS and a CSI-RS" is referred to as a "TRS/CSI-RS".

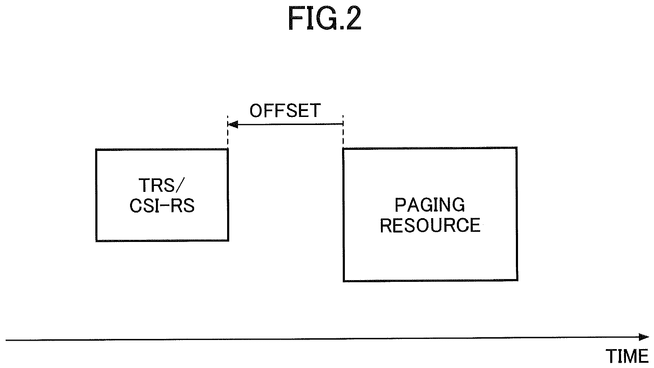

Fig. 2 is a diagram illustrating an example (1) of resource allocation according to an embodiment of the present invention. As illustrated in Fig. 2, a relative location or an offset of a TRS/CSI-RS with respect to a resource for paging (e.g., a PDCCH monitoring location for paging) may be indicated to the terminal 20 in the RRC idle state or in the RRC inactive state. The offset may be a relative position from a paging frame (PF).

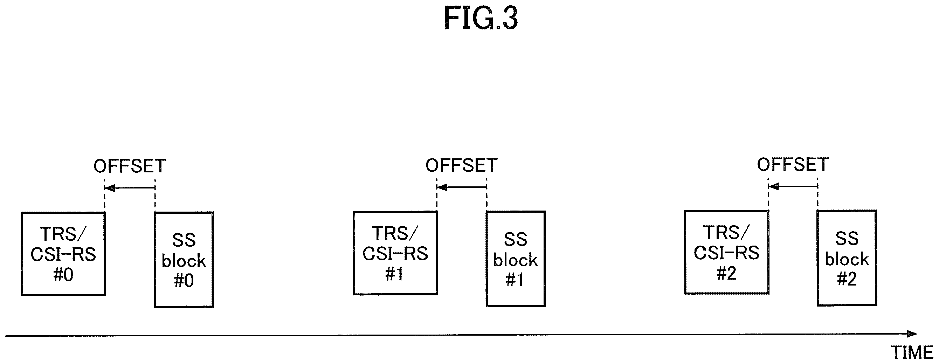

Fig. 3 is a diagram illustrating an example (2) of resource allocation according to an embodiment of the present invention. As illustrated in Fig. 3, relative locations or offsets of TRSs/CSI-RSs with respect to respective SSBs may be indicated to the terminal 20 in the RRC idle state or in the RRC inactive state. For example, an offset indicating the X number of slots before an SSB #0 may be indicated to the terminal 20. The offsets of the TRSs/CSI-RSs with respect to the SSBs may be the same or may be different.

Further, information related to a TRS/CSI-RS resource location may be directly indicated to the terminal 20. For example, information indicating a time location based on periodicity and an offset, a resource block (RB) location in a bandwidth part (BWP), or the like may be indicated to the terminal 20.

A time location and a frequency location may be specified by the above-described different options. For example, the time location may be indicated to the terminal 20 by specifying a relative location with respect to a paging resource, and the frequency location may be indicated to the terminal 20 by specifying an RB location within a BWP.

For example, if a plurality of paging resources or a plurality of SSBs (having different SSB indexes, for example an SSB #0, an SSB #1...) corresponding to a plurality of beams are configured, TRS/CSI-RS resource locations may be indicated as relative locations with respect to the plurality of respective paging resources or the plurality of respective SSBs. The terminal 20 may assume that a TRS/CSI-RS beam is equivalent to a beam applied to a corresponding paging resource or a corresponding SSB. That is, QCL-type D (Quasi co-location Type D) may be assumed between the TRS/CSI-RS and the corresponding paging resource or the corresponding SSB. QCL types other than QCL-type D may also be assumed between the TRS/CSI-RS and the corresponding paging resource or the corresponding SSB.

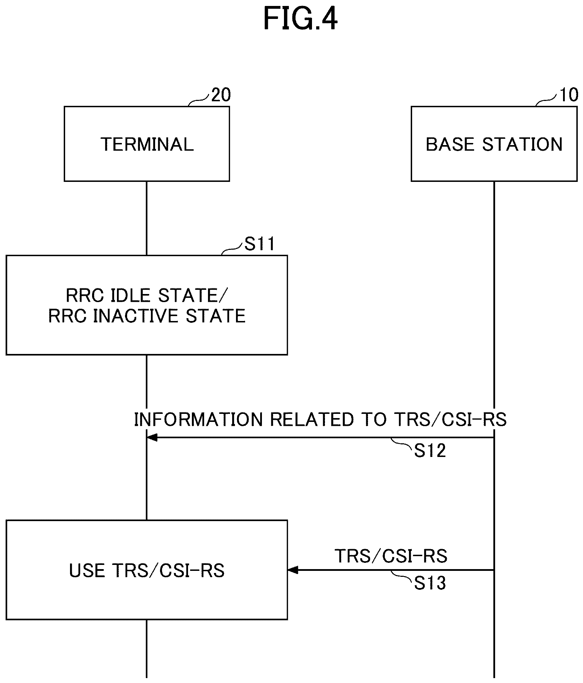

Fig. 4 is a sequence diagram illustrating an example (1) of a process related to synchronization according to an embodiment of the present invention. In step S11, the terminal 20 is in the RRC idle state or in the RRC inactive state. Subsequently, in step S12, the base station 10 transmits information related to a TRS/CSI-RS as described above to the terminal 20 as broadcast information, for example. In step S13, based on the received information related to the TRS/CSI-RS, the terminal 20 utilizes the TRS/CSI-RS transmitted from the base station 10. That is, the terminal 20 in the RRC idle state or in the RRC inactive state may perform time synchronization and/or frequency synchronization by using the TRS/CSI-RS transmitted from the base station 10, based on the received information related to the TRS/CSI-RS. The terminal 20 in the RRC idle state or in the RRC inactive state may also perform channel estimation and/or measurement by using the TRS/CSI-RS transmitted from the base station 10, based on the received information related to the TRS/CSI-RS.

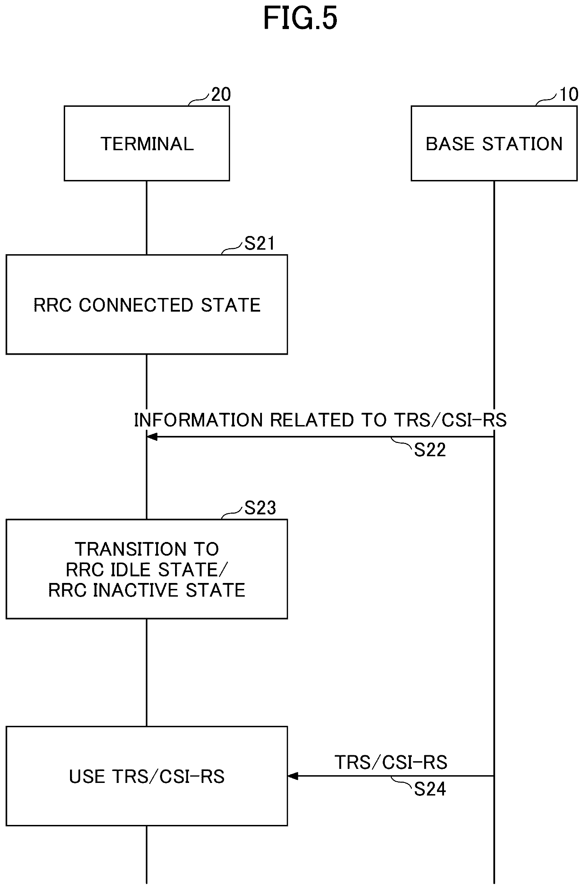

Fig. 5 is a flowchart illustrating an example (2) of a process related to synchronization according to an embodiment of the present invention. In step S21, the terminal 20 is in the RRC connected state. Subsequently, in step S22, the base station 10 transmits information related to a TRS/CSI-RS as described above to the terminal 20 via various types of signaling, for example. Examples of the various types of signaling may include RRC signaling, MAC signaling, and PHY signaling. In step S23, the terminal 20 transitions from the RRC connected state to the RRC idle state or the RRC inactive state. In step S24, the terminal 20 utilizes the TRS/CSI-RS transmitted from the base station 10, based on the information related to the TRS/CSI-RS received when the terminal 20 is in the RRC connected state. The terminal 20 in the RRC idle state or in the RRC inactive state may perform time synchronization and/or frequency synchronization by using the TRS/CSI-RS transmitted from the base station 10, based on the above-described information related to the TRS/CSI-RS received when the terminal 20 is in the RRC connected state. Further, the terminal 20 in the RRC idle state or in the RRC inactive state may perform channel estimation and/or measurement by using the TRS/CSI-RS transmitted from the base station 10, based on the received information related to the TRS/CSI-RS.

That is, once the terminal 20 transitions to the RRC connected state, even when the terminal 20 subsequently transitions to the RRC idle state or the RRC inactive state, the process may be performed by assuming that the signal is still transmitted from the base station 10 at the TRS/CSI-RS location when the terminal 20 is in the RRC connected state.

With respect to beam assumptions (spatial information), an assumption that is made when the terminal 20 is in the RRC connected state may be maintained even when the terminal 20 transitions to the RRC idle state or the RRC inactive state. That is, the terminal 20 may assume QCL-type D between the TRS/CSI-RS during the RRC connected state and the TRS/CSI-RS during the RRC idle state or the RRC inactive state.

The information related to TRS/CSI-RS transmitted from the base station 10 in step S22 may be information commonly used between: the connected state; and the idle state or the inactive state. Alternatively, the information related to TRS/CSI-RS transmitted from the base station 10 in step S22 may be information used in the idle state or in the inactive state. That is, the information related to TRS/CSI-RS may differ between: the connected state; and the idle state or the inactive state.

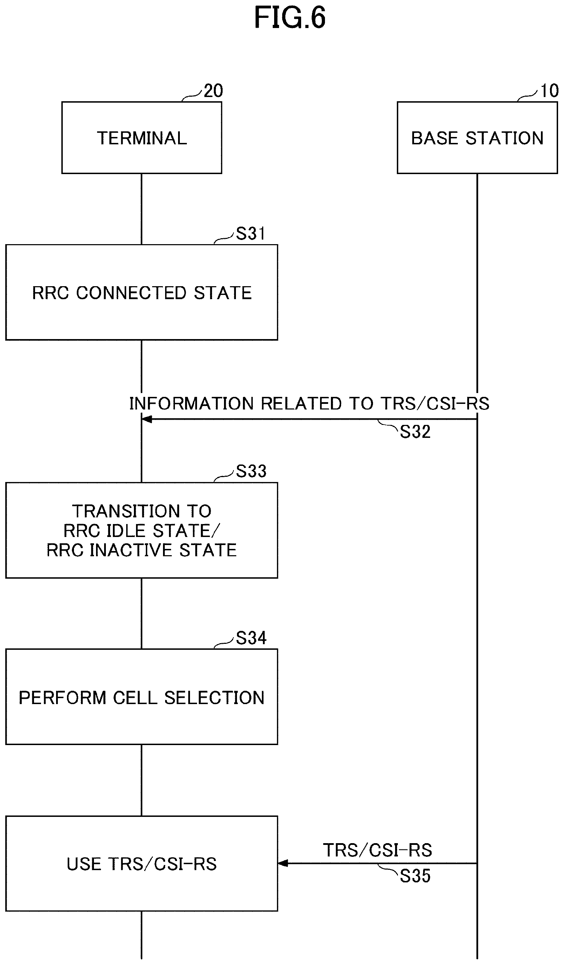

Fig. 6 is a flowchart illustrating an example (3) of a process related to synchronization according to an embodiment of the present invention. In step S31, the terminal 20 is in the RRC connected state. Subsequently, in step S32, the base station 10 transmits information related to a TRS/CSI-RS as described above to the terminal 20 via various types of signaling, for example. Examples of the various types of signaling may include RRC signaling, MAC signaling, and PHY signaling. In step S33, the terminal 20 transitions from the RRC connected state to the RRC idle state or the RRC inactive state. In step S34, the terminal 20 performs cell selection. In step S35, the terminal 20 uses the TRS/CSI-RS transmitted from the base station 10, based on the information related to the TRS/CSI-RS received in a cell before the cell selection. The terminal 20 may perform time synchronization and/or frequency synchronization by using the TRS/CSI-RS transmitted from the base station 10, based on the received information related to the TRS/CSI-RS. Further, the terminal 20 may perform channel estimation and/or measurement by using the TRS/CSI-RS transmitted from the base station 10, based on the received information related to the TRS/CSI-RS.

The cell selection in step S34 may be cell reselection. Further, after the cell selection in step S34, the base station 10 may be changed to another base station 10. In addition, if the cell reselection is performed, whether or not the information related to the TRS/CSI-RS is used continuously may be indicated by a network or may be defined in the technical specification.

In the above-described embodiment, even when the terminal 20 is in the RRC idle state or in the RRC inactive, the terminal 20 can obtain information related to a TRS/CSI-RS and use the TRS/CSI-RS, so as to increase locations in the time domain where synchronization can be performed. Accordingly, high-precision time synchronization and/or frequency synchronization can be performed.

That is, in a radio communication system, it is possible to increase locations in the time domain where synchronization can be performed.

### (Functional Configurations)

Next, examples of functional configurations of the base station 10 and the terminal 20 that perform the above-described processes and operations will be described. The base station 10 and the terminal 20 include the functions described in the above embodiments. However, the base station 10 and the terminal 20 may each include some of the functions described in the embodiments.

### <Base Station 10>

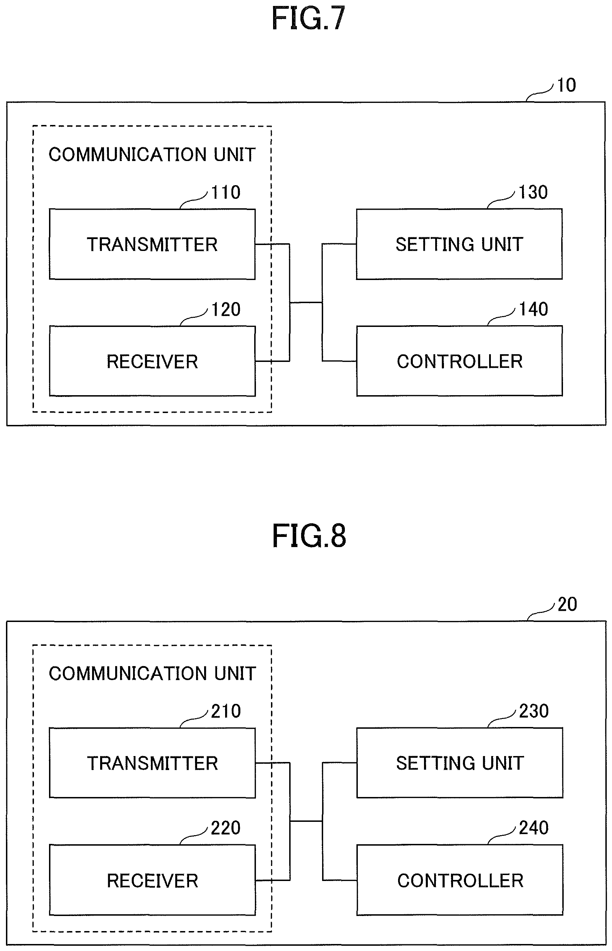

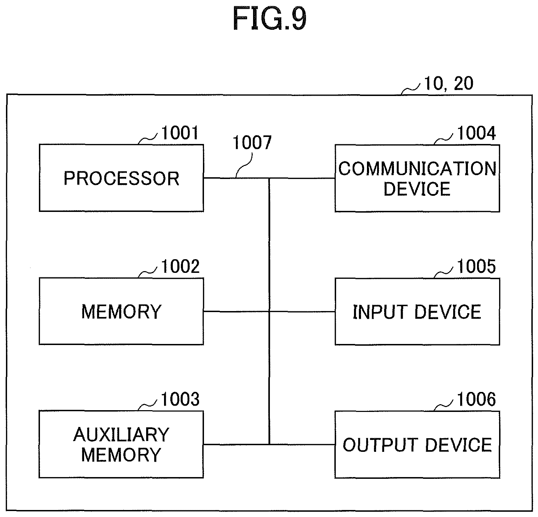

Fig. 7 is a diagram illustrating an example of a functional configuration of the base station 10 according to an embodiment of the present invention. As illustrated in Fig. 7, the base station 10 includes a transmitter 110, a receiver 120, a setting unit 130, and a controller 140. The functional configuration illustrated in Fig. 9 is merely an example. As long as the operations according to the embodiments of the present invention can be performed, any functional classifications and names of functional units may be used.

The transmitter 110 includes a function to generate a signal and to wirelessly transmit the signal to the terminal 20. Further, the transmitter 110 transmits an inter-network-node message to another network node. The receiver 120 includes a function to wirelessly receive various types of signals transmitted from the terminal 20 and to obtain higher layer information from the received signals. In addition, the transmitter 110 includes a function to transmit NR-PSS, NR-SSS, NR-PBCH, and DL/UL control signals and reference signals to the terminal 20. The receiver 120 receives an inter-network-node message from another network node. The transmitter 110 and the receiver 120 may be integrated into a communication unit.

The setting unit 130 stores, in a storage device, preconfigured setting information and various types of setting information to be transmitted to the terminal 20, and reads such setting information from the storage device as necessary. Contents of the setting information may be information necessary for synchronization, for example.

The controller 140 performs the control related to synchronization as described in the embodiments. A functional unit of the controller 140 for signal transmission may be included in the transmitter 110, and a functional unit of the controller 140 for signal reception may be included in the receiver 120.

### <Terminal 20>

FIG. 8 is a diagram illustrating an example of a functional configuration of the terminal 20 according to an embodiment of the present invention. As illustrated in Fig. 8, the terminal 20 includes a transmitter 210, a receiver 220, a setting unit 230, and a controller 240. The functional configuration illustrated in FIG. 8 is merely an example. As long as the operations according to the embodiments of the present invention can be performed, any functional classifications and names of functional units may be used.

The transmitter 210 has a function to generate a transmission signal from transmission data, and to wirelessly transmit the transmission signal. The receiver 220 wirelessly receives various types of signals, and obtains higher layer signals from the received physical layer signals. In addition, the receiver 220 may include a function to receive NR-PSS, NR-SSS, NR-PBCH, and DL/UL/SL control signals transmitted from the base station 10. Further, as D2D communication, the transmitter 210 transmits a physical sidelink control channel (PSCCH), a physical sidelink shared channel (PSSCH), a physical sidelink discovery channel (PSDCH), a physical sidelink broadcast channel (PSBCH), and the like to another terminal 20, and receives a PSCCH, a PSSCH, a PSDCH, a PSBCH, and the like from the other terminal 20. The transmitter 210 and the receiver 220 may be integrated into a communication unit.

The setting unit 230 stores, in a storage device, various types of setting information received from the base station 10 or another terminal 20 via the receiver 220, and reads such setting information from the storage device as necessary. In addition, the setting unit 230 stores preconfigured setting information. Contents of the setting information may be information necessary for synchronization, for example.

The controller 240 performs the control related to synchronization as described in the embodiments. A functional unit of the controller 240 for signal transmission may be included in the transmitter 210, and a functional unit of the controller 240 for signal reception may be included in the receiver 220.

### (Hardware Configuration)

The block diagrams (FIG. 7 and FIG. 8) used in the above description of the embodiments illustrate functional unit blocks. These functional blocks (components) are implemented in any combination of hardware and/or software. Further, means for implementing the functional blocks are not particularly limited. In other words, the functional blocks may be implemented in one physically and/or logically coupled device or in multiple devices where two or more physically and/or logically separated devices are connected directly and/or indirectly (for example, in wired and/or wireless manners). A functional block may be implemented by combining software with the above-described one or more devices.

The functions include judging, deciding, determining, computing, calculating, processing, deriving, examining, searching, ascertaining, receiving, transmitting, outputting, accessing, solving, selecting, choosing, establishing, comparing, assuming, expecting, deeming, broadcasting, notifying, communicating, forwarding, configuring, reconfiguring, allocating, mapping, and assigning; however, the functions are not limited thereto. For example, a functional block (component) for transmission is referred to as a transmitting unit or a transmitter. For all the functions, the implementation methods are not particularly limited as described above.

For example, the base station 10 and the terminal 20 according to an embodiment of the present disclosure may function as computers for executing a process of a radio communication method according to the present disclosure. FIG. 9 is a diagram illustrating a hardware configuration of each of the base station 10 and the terminal 20 according to an embodiment of the present disclosure. Each of the above-described base station 10 and the terminal 20 may be physically configured as a computer including a processor 1001, a memory 1002, an auxiliary memory 1003, a communication device 1004, an input device 1005, an output device 1006, and a bus 1007.

In the following description, the term "apparatus" can be interchangeably read as a circuit, a device, a unit or the like. The hardware configuration of each of the base station 10 and the terminal 20 may be configured so as to include the one or more devices illustrated in FIG. 11 or so as not to include a part of the devices.

The functions of the base station 10 and the terminal 20 are implemented by causing hardware such as the processor 1001 and the memory 1002 to read predetermined software (a program) so as to allow the processor 1001 to execute operations, control communication by the communication device 1004, and control at least one of reading and writing of data from/into the memory 1002 and the auxiliary memory 1003.

The processor 1001 controls the whole computer by, for example, running an operating system. The processor 1001 may be configured by a central processing unit (CPU) including an interface with a peripheral device, a control device, an arithmetic device, and a register. For example, each of the above-described controller 140, the controller 240, and the like may be implemented by the processor 1001.

Further, the processor 1001 reads programs (program codes), software modules, and data from at least one of the auxiliary memory 1003 and the communication device 1004 into the memory 1002, and executes various processes in accordance therewith. Examples of the programs include a program for causing the computer to execute at least a part of operations described in the above embodiments. For example, the controller 140 of the base station 10 illustrated in FIG. 7 may be stored in the memory 1002, and may be implemented by control programs executed by the processor 1001. In addition, for example, the controller 240 of the terminal 20 illustrated in FIG. 8 may be stored in the memory 1002, and may be implemented by control programs executed by the processor 1001. Although an example in which the above-described various types of processes are performed by the single processor 1001 has been described, the processes may be simultaneously or sequentially performed by two or more processors 1001. The processor 1001 may be implemented with one or more chips. Note that the programs may be transmitted from a network via an electric communication line.

The memory 1002 is a computer-readable recording medium, and may include at least one of a read-only memory (ROM), an erasable programmable ROM (EPROM), an electrically erasable programmable ROM (EEPROM), and a random-access memory (RAM), for example. The memory 1002 may be referred to as a register, a cache, or a main memory (a main storage device). The memory 1002 can store, for example, programs (program codes) and software modules that can be executed to perform the communication method according to an embodiment of the present disclosure.

The auxiliary memory 1003 is a computer-readable recording medium, and may include at least one of an optical disc such as a compact disc read-only memory (CD-ROM), a hard disk drive, a flexible disk, a magnetic optical disc (such as a compact disc, a digital versatile disc, and a Blu-ray (registered trademark) disk), a smart card, flash memory (such as a card, a stick, and a key drive), a floppy (registered trademark) disk, and a magnetic strip. The above-described recording medium may be a database or a server including at least one of the memory 1002 and/or the auxiliary memory 1003, or may be any other appropriate medium.

The communication device 1004 is hardware (a transmitting/receiving device) that performs communication between computers via a wired and/or wireless network, and may be referred to as a network device, a network controller, a network card, or a communication module. The communication device 1004 may include a radio frequency switch, a duplexer, a filter, a frequency synthesizer, and the like, in order to implement at least one of frequency division duplex (FDD) and time division duplex (TDD). For example, a transmitting/receiving antenna, an amplifier unit, a transmitting/receiving unit, a transmission line interface, and the like may be implemented by the communication device 1004. The transmitting/receiving unit may be may be physically or logically separated and implemented as a transmitting unit and a receiving unit.

The input device 1005 is an input device (such as a keyboard, a mouse, a microphone, a switch, a button, or a sensor) that receives inputs from the outside. The output device 1006 is an output device (such as a display, a speaker, or a LED ramp) that provides outputs to the outside. Note that the input device 1005 and the output device 1006 may be an integrated device (for example, a touch panel).

Further, the devices such as the processor 1001 and the memory 1002 are connected with each other via the bus 1007 that communicates information. The bus 1007 may be a single bus or may be different buses for different devices.

Each of the base station 10 and the terminal 20 may be configured to include hardware such as a macro processor, a digital signal processor (DSP), an application-specific integrated circuit (ASIC), a programmable logic device (PLD), and a field-programmable gate array (FPGA), and a part or all of the functional blocks may be implemented by the hardware. For example, the processor 1001 may include at least one of these hardware devices.

### (Summary of Embodiments)

As described above, according to an embodiment of the present invention, a terminal includes a receiver that receives information related to a reference signal, and a controller that uses the reference signal in a radio resource control (RRC) idle state or in an RRC inactive state, based on the information.

With the above configuration, the terminal 20 can obtain the information related to the TRS/CSI-RS and use the TRS/CSI-RS, so as to increase locations in the time domain where synchronization can be performed. Accordingly, high-precision time synchronization and/or frequency synchronization can be performed. That is, in a radio communication system, it is possible to increase locations in the time domain where synchronization can be performed.

The receiver may receive the information related to the reference signal in the RRC idle state or in the RRC inactive state. With this configuration, the terminal 20 can obtain the information related to the TRS/CSI-RS even when the terminal 20 is in the RRC idle state or in the RRC inactive state, and use the TRS/CSI-RS so as to increase locations in the time domain where synchronization can be performed. Accordingly, high-precision time synchronization and/or frequency synchronization can be performed.

The information may include a relative location of the reference signal with respect to a resource related to paging, or include a relative location of the reference signal with respect to a synchronization signal. With this configuration, the terminal 20 can efficiently obtain the information related to the TRS/CSI-RS even when the terminal 20 is in the RRC idle state or in the RRC inactive state.

The controller may assume that the resource related to paging or the synchronization signal is quasi co-located (QCL) with the reference signal, a relative location of the resource related to paging or of the synchronization signal being indicated with respect to the reference signal. With this configuration, the terminal 20 can efficiently obtain the information related to the TRS/CSI-RS even when the terminal 20 is in the RRC idle state or in the RRC inactive state.

The receiver may receive the information related to the reference signal in an RRC connected state. With this configuration, the terminal 20, in the RRC idle state or in the RRC inactive state, can use the information related to the TRS/CSI-RS received when the terminal 20 is in the RRC connected state.

In addition, according to an embodiment of the present invention, a communication method performed by a terminal is provided. The method includes receiving information related to a reference signal, and using the reference signal in a radio resource control (RRC) idle state or in an RRC inactive state, based on the information.

With the above configuration, the terminal 20 can obtain the information related to the TRS/CSI-RS and use the TRS/CSI-RS, so as to increase locations in the time domain where synchronization can be performed. Accordingly, high-precision time synchronization and/or frequency synchronization can be performed. That is, in a radio communication system, it is possible to increase locations in the time domain where synchronization can be performed.

### (Supplements to Embodiments)

Although the embodiments of the present invention have been described above, the disclosed invention is not limited to the above-described embodiments, and persons skilled in the art will appreciate various variations, modifications, alternatives, replacements, and the like. Specific examples of numerical values are used in the description in order to facilitate understanding of the present invention. However, these numerical values are merely examples, and any other appropriate values may be used, unless otherwise specified. Classifications of items in the above description are not essential to the present invention. Depending on necessity, subject matter described in two or more items may be combined and used, and subject matter described in an item may be applied to subject matter described in another item (as long as no contradiction occurs). A boundary of a functional unit or a processing unit in the functional block diagrams does not necessarily correspond to a boundary of a physical component. Operations of a plurality of functional units may be physically executed by a single component, or an operation of a single functional unit may be physically executed by a plurality of components. The orders of the procedures described in the embodiments may be changed as long as no contradiction occurs. For the convenience of description, the base station 10 and the terminal 20 have been described by using the functional block diagrams; however, such devices may be implemented in hardware, software, or combinations thereof. Software executed by the processor included in the base station 10 in accordance with the embodiments of the present invention and software executed by the processor included in the terminal 20 in accordance with the embodiments of the present invention may be stored in any appropriate storage medium, such as a random-access memory (RAM), a flash memory, a read-only memory (ROM), an EPROM, an EEPROM, a register, a hard disk drive (HDD), a removable disk, a CD-ROM, a database, and a server.

Notification of information is not limited to the aspects/embodiments described herein and may be performed in any other manner. For example, information may be indicated by physical layer signaling (for example, downlink control information (DCI) and uplink control information (UCI)), higher layer signaling (for example, radio resource control (RRC) signaling, medium access control (MAC) signaling, broadcast information (master information block (MIB), and system information block (SIB))), any other signal, or a combination thereof. Further, the RRC signaling may be referred to as an RRC message, and may be an RRC connection setup message or an RRC connection reconfiguration message.

The aspects/embodiments disclosed herein may be applied to at least one of systems that utilize Long-Term Evolution (LTE), LTE-Advanced (LTE-A), SUPER 3G, IMT-Advanced, 4G, 5G, Future Radio Access (FRA), NR (New Radio), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, UWB (ultra-wideband), Bluetooth (registered trademark), any other appropriate system, and a next-generation system enhanced based on the above systems.

The orders of procedures, sequences, and flowcharts of the aspects/embodiments described in this specification may be changed, as long as no contradiction occurs. For example, in a method described in this specification, various steps are presented in an exemplary order, and is not limited to a specific order presented.

Certain operations described as being performed by the base station 10 may be performed by its upper node, in some cases. In a network including one or more network nodes having the base station 10, it is apparent that various operations performed for communication with the terminal 20 may be performed by at least one of the base station 10 and a network node other than the base station 10 (for example, a mobility management entity (MME) or a serving-gateway (S-GW) may be assumed, but the network node is not limited thereto). Although an example, in which there is one network node other than the base station 10, has been described, multiple other network nodes (for example, MMEs and S-GWs) may be used in combination.

Information, signals, or the like may be output from the upper layer (or the lower layer) to the lower layer (or the upper layer). Information, signals, or the like may be input/output via a plurality of network nodes.

Input/output information and the like may be stored in a specific location (for example, a memory) or managed by a management table. Input/output information and the like may be overwritten, updated, or added. Output information and the like may be deleted. Input information and the like may be transmitted to other devices.

According to the present disclosure, the determination may be made by a value (0 or 1) represented by one bit, may be made by a Boolean value (Boolean: true or false), and may be made by comparison of numerical values (comparison with a predetermined value, for example).

Software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like, regardless of whether the software is referred to as software, firmware, middleware, microcode, hardware description language, or any other name.

Furthermore, software, instructions, information, and the like may be transmitted and received via a transmission medium. For example, when the software is transmitted from a website, server, or any other remote source, using at least one of a wired technology (such as a coaxial cable, a fiber optic cable, a twisted pair, and a digital subscriber line (DSL)) and a wireless technology (such as infrared and microwaves), these wired and/or wireless technologies are included within the definition of the transmission medium.

Information, signals, and the like as described herein may be represented with use of any of various different techniques. For example, data, an instruction, a command, information, a signal, a bit, a symbol, and a chip that may be referred to throughout the above description may be represented by a voltage, a current, an electromagnetic wave, a magnetic field, a magnetic particle, an optical field, a photon, or any combination thereof.

Terms described herein and terms necessary to understand the present disclosure may be replaced with terms having the same or similar meanings. For example, at least one of a channel and a symbol may be a signal. In addition, the signal may be a message. Further, a component carrier (CC) may be referred to as a carrier frequency, a cell, or a frequency carrier.

As used herein, the terms "system" and "network" are interchangeably used.

Further, information, parameters, and the like described herein may be represented as absolute values, may be represented as relative values from predetermined values, or may be represented as other corresponding information. For example, a radio resource may be specified by an index.

Names used for the above-described parameters are not intended to be restrictive in any way. Further, there may be a case where formulas using these parameters may be different from those explicitly disclosed herein. Various channels (such as a PUCCH and a PDCCH) and information elements can be identified with any names, and names assigned to these various channels and information elements are not intended to be restrictive in any way.

In the present disclosure, the terms such as "base station (BS)", "radio base station", "base station apparatus", "fixed Station", "Node B", "eNode B (eNB)", "gNode B (gNB)", "access point", "transmission/reception point", "cell", "sector", "cell group", "carrier", and "component carrier" may be used interchangeably. The base station may be referred to as a macro cell, a small cell, a femtocell, a picocell, or any other term.

A base station can accommodate one or more (three, for example) cells. If the base station accommodates multiple cells, the whole coverage area of the base station can be segmented into multiple smaller areas, and the smaller areas can each provide a communication service by using a base station subsystem (such as a remote radio head (RRH), which is an indoor small base station). The term "cell" or "sector" refers to a part of or the entirety of the coverage area of at least one of a base station and a base station subsystem providing a communication service in this coverage.

In the present disclosure, the terms such as "mobile station (MS)", "user terminal", "user equipment (UE)", and "terminal" may be used interchangeably.

A mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate term.

At least one of the base station and the mobile station may be referred to as a transmitting device, a receiving device, a communication device, or the like. At least one of the base station and the mobile station may be a device mounted on a mobile body, the moving body itself, or the like. The moving body may be a vehicle (such as a car or an airplane, for example), a moving body that moves unmanned (such as a drone or an autonomous vehicle, for example), or a robot (manned or unmanned). At least one of the base station and the mobile station also includes a device that does not necessarily move during communication operations. For example, at least one of the base station and the mobile station may be an Internet of Things (IoT) device such as a sensor.

The base station in the present disclosure may be replaced with the user terminal. For example, each aspect/embodiment of the present disclosure may be applied to a configuration such that the communication between the base station and the terminal is replaced with communication between a plurality of terminals 20 (which may be referred to as device-to-device (D2D) communication, vehicle-to-everything (V2X) communication, or the like). In this case, the functions of the above-described base station 10 may be included in the terminal 20. Additionally, the terms such as "uplink" and "downlink" may be replaced with terms corresponding to inter-terminal communication (e.g., "side"). For example, an uplink channel, a downlink channel may be replaced with a side channel.

Similarly, the user terminal in the present disclosure may be replaced with the base station. In this case, the functions included in the above-described user terminal may be included in the base station.

As used herein, the terms "determining" and "deciding" may include various types of operations. For example, "determining" and "deciding" may include determining that calculating, computing, processing, deriving, investigating, looking up (for example, looking up a table, a database, or any other data structure), or ascertaining is considered to be performed. Further, the term "determining" may include deeming that a result of judging, calculating, computing, processing, deriving, investigating, looking up (e.g., search in a table, a database, or another data structure), or ascertaining is determined or decided. Furthermore, "determining" and "deciding" may include deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided. Further, "determining (deciding)" may be replace with "assuming", "expecting", or "considering".

The terms "connected", "coupled", or any variation thereof mean any direct or indirect connection or coupling between two or more elements, and may include the presence of one or more intermediate elements between the two elements "connected" or "coupled" to each other. The coupling or connection between the elements may be physical, logical or a combination thereof. For example, "connected" may be replaced with "access". As used herein, two elements can be considered to be mutually "connected" or "coupled" by using at least one of one or more wires, cables and printed electrical connections, and, as some non-limiting and non-inclusive examples, by using electromagnetic energy such as electromagnetic energy with a wavelength in a radio frequency range, a microwave range, and an optical range (both visible and invisible).

The reference signal may be abbreviated as RS, and may be referred to as a pilot according to applicable standards.

As used herein, the term "based on" does not mean "based only on", unless otherwise specified. In other words, the term "based on" means both "based only on" and "based at least on".

Any reference to elements that use terms such as "first" and "second" used herein does not generally limit the amount or order of these elements. These terms can be used in the present disclosure as a convenient way to distinguish between two or more elements. Accordingly, the reference to the first and second elements does not mean that only two elements can be employed, or does not mean that the first element must precede the second element in any fashion.

The term "means" used in a configuration of each apparatus as described above may be replaced with "unit", "circuit", "device", or the like.

As long as the terms "include", "including", and any variation thereof are used in the present disclosure, these terms are intended to be inclusive similar to the term "comprising". Further, the term "or" used in the present disclosure is intended not to be "exclusive or".

A radio frame may be configured by one or more frames in a time domain. In the time domain, the one or more frames may be referred to as subframes. The subframes may be each configured by one or more slots in the time domain. Further, a subframe may be a fixed time length (e.g., 1 ms) that does not depend on numerology.

The numerology may be a communication parameter to be applied to at least one of transmission or reception of a signal or a channel. The numerology may represent, for example, at least one of a subcarrier spacing (SCS), a bandwidth, a symbol length, a cyclic prefix length, a transmission time interval (TTI), a symbol number per TTI, a radio frame configuration, a specific filtering process performed by a transmitter/receiver in the frequency domain, and a specific windowing process performed by a transmitter/receiver in a time domain.

A slot may be configured by one or more symbols (such as orthogonal frequency division multiplexing (OFDM) symbols or single carrier frequency division multiple access (SC-FDMA) symbols) in a time domain. A slot may be a unit of time based on the numerology.

A slot may include a plurality of mini-slots. In a time domain, each mini-slot may be configured by one or more symbols. A mini-slot may be referred to as a sub-slot. A mini-slot may be configured by fewer symbols than those of a slot. A PDSCH (or PUSCH) transmitted in a unit of time that is greater than a mini-slot may be referred to as "PDSCH (or PUSCH) mapping type A". A PDSCH (or PUSCH) transmitted using a mini-slot may be referred to as "PDSCH (or PUSCH) mapping type B".

A radio frame, a subframe, a slot, a mini-slot, and a symbol each represent a time unit for transmitting a signal. The radio frame, the subframe, the slot, the mini-slot, and the symbol may be denoted by respective different names.

For example, one subframe may be referred to as a transmission time interval (TTI), a plurality of consecutive subframes may be referred to as a TTI, or one slot or one mini-slot may be referred to as a TTI. Namely, at least one of a subframe and a TTI may be a subframe (1 ms) in the existing LTE, may be a time interval shorter than 1 ms (e.g., 1 to 13 symbols), or a time interval longer than 1 ms. Note that the unit representing a TTI may be referred to as a slot, a mini-slot, or the like, instead of a subframe.

For example, a TTI refers to the minimum time unit for scheduling in radio communication. For example, in the LTE system, the base station performs scheduling for allocating radio resources (such as a frequency bandwidth and transmission power that can be used in each terminal 20) in units of TTIs to each of the terminals 20. Note that the definition of "TTI" is not limited the above.

A TTI may be a transmission time unit, such as a channel-coded data packet (transport block), a code block, or a codeword, or may be a processing unit for scheduling or link adaptation. Note that, when a TTI is provided, a time interval (e.g., a symbol number) onto which a transport block, a code block, or a code ward is actually mapped may be shorter than the TTI.

Note that, when one slot or one mini-slot is referred to as a TTI, one or more TTIs (i.e., one or more slots or one or more mini-slots) may be the minimum time unit for scheduling. Additionally, the number of slots (the number of mini-slots) forming the minimum time unit for scheduling may be controlled.

A TTI with a time length of 1 ms may be referred to as an ordinary TTI (a TTI in LTE Rel. 8-12), a normal TTI, a long TTI, an ordinary subframe, a normal subframe, a long subframe, a slot, or the like. A TTI that is shorter than a normal TTI may be referred to as a shortened TTI, a short TTI, a partial TTI (or a fractional TTI), a shortened subframe, a short subframe, a mini-slot, a sub-slot, a slot, or the like.

Note that a long TTI (e.g., a normal TTI, a subframe, or the like) may be replaced with a TTI with a time length exceeding 1 ms, and a short TTI (e.g., a shortened TTI or the like) may be replaced with a TTI with a TTI length that is shorter than the TTI length of the long TTI and longer than or equal to 1 ms.

A resource block (RB) is a resource allocation unit in the time domain and the frequency domain, and may include one or more consecutive subcarriers in the frequency domain. A number of subcarriers included in an RB may be the same, irrespective of numerology, and may be 12, for example. The number of subcarriers included in an RB may be determined based on numerology.

Further, an RB may include one or more symbols in the time domain, and may have a length of one slot, one mini-slot, one subframe, or one TTI. Each of one TTI and one subframe may be configured by one or more resource blocks.

Note that one or more RBs may be referred to as physical resource blocks (PRBs), subcarrier groups (SCGs), resource element groups (REGs), PRB pairs, RB pairs, or the like.

Further, a resource block may be configured by one or more resource elements (REs). For example, one RE may be a radio resource area of one subcarrier and one symbol.

A bandwidth part (BWP) (which may also be referred to as a partial bandwidth, for example) may represent, in a certain carrier, a subset of consecutive common resource blocks (common RBs) for a certain numerology. As used herein, the common RB may be specified by an index of an RB when a common reference point of the carrier is used as reference. A PRB may be defined in a BWP, and may be numbered in the BWP.

A BWP may include a BWP for UL (UL BWP) and a BWP for DL (DL BWP). For the UE, one or more BWPs may be configured in one carrier.

At least one of configured BWPs may be active, and the UE is not required to assume that a predetermined signal/channel is transmitted/received outside the active BWP(s). Note that "cell", "carrier", and the like in the present disclosure may be replaced with "BWP".

The structures of the above-described radio frame, subframe, slot, mini-slot, symbol, and the like are merely examples. For example, the following configurations can be variously changed: the number of subframes included in a radio frame; the number of slots per subframe or per radio frame; the number of mini-slots included in a slot; the number of symbols and RBs included in a slot or mini-slot; the number of subcarriers included in an RB; and the number of symbols, the symbol length, the cyclic prefix (CP) length, and the like within a TTI.

In the present disclosure, for example, if articles such as "a", "an", and "the" in English are added to the translation, nouns following the articles may be plural.

In the present disclosure, the term "A and B are different" may imply that "A and B are different from each other". Note that the term may also imply "each of A and B is different from C." The terms such as "separated" and "coupled" may also be interpreted similarly.

The aspects/embodiments described herein may be used alone, may be used in combination, or may be switched at the time of execution. Furthermore, notification of predetermined information (e.g., notification of "being X") is not limited to notification that is made explicitly, and the notification may be made implicitly (by not sending notification of the predetermined information, for example).

Further, in the present disclosure, a TRS/CSI-RS is an example of a reference signal. An SSB is an example of a synchronization signal.

Although the embodiments of the present invention have been described in detail, it will be readily apparent to those skilled in the art that the present invention is not limited to the embodiments described in the specification. Variations and modifications can be made to the present invention without departing from the scope of the present invention described in the claims. Accordingly, the description of the present specification is intended to provide an illustrative description and is not intended to have any restrictive meaning to the present invention.

### DESCRIPTION OF THE REFERENCE NUMERALS

- 10: base station
- 110: transmitter
- 120: receiver
- 130: setting unit
- 140: controller
- 20: terminal
- 210: transmitter
- 220: receiver
- 230: setting unit
- 240: controller
- 1001: processor
- 1002: memory
- 1003: auxiliary memory
- 1004: communication device
- 1005: input device
- 1006: output device

## Claims

1. A terminal comprising:
a receiver that receives information related to a reference signal; and
a controller that uses the reference signal in a radio resource control (RRC) idle state or in an RRC inactive state, based on the information.

2. The terminal according to claim 1, wherein the receiver receives the information related to the reference signal in the RRC idle state or in the RRC inactive state.

3. The terminal according to claim 2, wherein the information includes a relative location of the reference signal with respect to a resource related to paging, or includes a relative location of the reference signal with respect to a synchronization signal.

4. The terminal according to claim 3, wherein the controller assumes that the resource related to paging or the synchronization signal is quasi co-located (QCL) with the reference signal, a relative location of the resource related to paging or of the synchronization signal being indicated with respect to the reference signal.

5. The terminal according to claim 1, wherein the receiver receives the information related to the reference signal in an RRC connected state.

6. A communication method performed by a terminal, the method comprising:
receiving information related to a reference signal; and
using the reference signal in a radio resource control (RRC) idle state or in an RRC inactive state, based on the information.
